# EUROPEAN PATENT SPECIFICATION

(11) **EP 2 839 191 B1**
(45) Date of publication and mention of the grant of the patent: **15.11.2017**
(21) Application number: 13708888.6
(22) Date of filing: 28.02.2013
(51) Int. Cl.: F16K 3/02, F16K 3/20

(54) **GATE VALVE**
ABSPERRVENTIL
ROBINET-VANNE

(30) Priority: 17.04.2012 GB 201206753
(43) Date of publication of application: 25.02.2015
(73) Proprietor: Pacson Limited, Dundee, Tayside DD4 9UA (GB)
(72) Inventor: BEST, Richard Graham, Cairneyhill Fife (GB)
(74) Representative: HGF Limited
(86) International application number: PCT/GB2013/050490
(87) International publication number: WO 2013/156748

(56) References cited:
- US-A- 2 796 230
- US-A- 5 624 101

## Description

The present invention relates to a gate valve and particularly, but not exclusively, to a gate valve comprising an improved seat structure which maintains a fluid-tight seal between an external valve cavity and the upstream portion of a valve bore and/or the downstream portion of a valve bore, regardless of pressure differentials between the three.

It is well known in the field of gate valves to affect a fluid-tight seal by urging a sealing face of a slab-type gate member into sealing contact with a downstream valve seat by means of a fluid pressure differential within the valve bore. For bi-directional valves an upstream valve seat is also provided such that an opposing sealing face of the gate member ensures a fluid-tight seal when the fluid pressure direction is reversed.

Double isolation gate valves are also well known in which both the upstream and downstream valve seats are simultaneously urged into sealing contact with opposing sealing faces of the gate member irrespective of the fluid pressure direction. For example, this may be achieved by providing a resilient means to bias the upstream valve seat against an upstream sealing face of the gate member. A perceived advantage of double isolation valves is that when the external valve cavity pressure exceeds that applied within the valve bore, the pressure differential causes it to overcome the resilient means and vent into the upstream valve bore.

Although this functionality is promoted within the industry as a safety feature, it places limitations on the ability to conduct in-service testing of the sealing integrity of slab type gate valves, i.e. performed by applying pressure into the valve cavity between the upstream and downstream valve seats. Consequently, where the ability to conduct in-service testing is a mandatory requirement, the choice of design is restricted to existing double-wedge or expanding gate valve types. Such valve types apply a mechanical wedging force onto the upstream and downstream valve seats within the valve bore in a direction perpendicular to its flow axis thus enabling in-service seal integrity testing irrespective of internal fluid pressure levels, and without unseating the upstream valve seat. However, double-wedge or expanding gate valve types may not fulfil other valve specification requirements which are best met by slab gate valves.

Accordingly, there is a requirement for a gate valve which overcomes the disadvantages described above, and which allows in-service seal integrity testing.

US 2796230A (Grove Marvin H. et al) discloses a bi-directional gate valve comprising a pair of opposing slidable seat rings 60, disposed on opposite sides of a gate 17.

According to an aspect of the present invention there is provided a bi-directional gate valve comprising:
(i) a valve body having a valve bore extending therethrough along an axis;
(ii) a valve cavity surrounding the valve bore;
(iii) a gate member operable within the valve body in a direction transverse to the longitudinal axis to open and close the valve bore;
(iv) opposed gate sealing faces provided on the gate member;
(v) an annular recess provided around the perimeter of the valve bore proximate each of the opposed gate sealing faces of the gate member;
(vi) an annular seat member mounted within each recess comprising of an outer fixed seat portion and an inner moveable seat portion;
(vii) an annular seat sealing face provided on each inner moveable seat portion for sealing against a corresponding gate sealing face;
(viii) end walls provided on the valve body remote from the opposed gate sealing faces of the gate member and extending between the valve cavity and the valve bore;
(ix) at least one annular sealing member for selectively sealing at two different predetermined annular locations between the end wall proximate one recess and an opposing wall of its corresponding inner moveable seat member; and
(x) at least one annular sealing member for selectively sealing at two different predetermined annular locations between the end wall proximate the other recess and an opposing wall of its corresponding inner moveable seat member;
wherein the seat sealing face of each inner moveable seat portion protrudes from a surrounding transverse wall and has an annular sealing contact area which is less than an annular area on the corresponding opposing wall which is defined between
said two different predetermined annular sealing locations; and wherein the annular sealing contact area of the seat sealing face of each inner moveable seat portion is located at an intermediate transverse position between the two different predetermined annular sealing locations of its at least one annular sealing member.

Optionally, the end walls each have a stepped profile comprising a series of mutually perpendicular longitudinal and transverse faces when viewed in cross-section through the axis of the valve bore.

Optionally, the width of each recess reduces progressively in a step-wise fashion with increasing transverse distance from the axis.

Optionally, the end wall of each recess comprises three concentric transverse faces and three concentric longitudinal faces.

Optionally, the opposing walls of each annular seat member comprise complementary longitudinal and transverse faces.

Optionally, a cavity is formed between the respective complementary longitudinal and transverse faces of each inner moveable seat portion and the corresponding opposing faces of its recess end wall.

Optionally, each at least one annular sealing member is located within its corresponding cavity for selectively sealing at an inner or an outer annular location therein.

Optionally, each inner annular location is located concentrically within the corresponding outer annular location.

Optionally, a resilient means is provided between a transverse face of the end wall of each recess and an opposing wall of the corresponding moveable seat portion for urging the moveable seat portion towards the gate member.

Optionally, each outer seat portion is permanently sealed against the end wall of its corresponding recess.

Optionally, the outer seat portion and the inner moveable seat portion of each annular seat member are separated by a gap for the passage of fluid.

Optionally, the annular sealing contact area of the seat sealing face of each outer seat portion is greater than the corresponding annular sealing contact area of each inner moveable seat portion.

Embodiments of the present invention will now be described, by way of example only, with reference to the following drawings in which:
Fig. 1 is a schematic cross-sectional view through a longitudinal axis of a closed valve bore of a uni-directional slab gate valve construction under upstream pressure, which does not form part of the claimed invention;
Fig. 2 is a schematic cross-sectional view of the upstream annular seat member of the valve of Fig. 1 showing its interaction with an upstream recess and a slab gate member;
Fig. 3 is a schematic cross-sectional view corresponding to Fig. 1 indicating a leak of pressure into the valve cavity;
Fig. 4 is a schematic cross-sectional view corresponding to Fig. 3 showing the contact between the slab gate and the upstream and downstream seats in more detail;
Fig. 5 is a schematic cross-sectional view corresponding to Fig. 1 wherein the valve construction is under a test pressure applied from the valve cavity;
Fig. 6 is a schematic cross-sectional view corresponding to Fig. 5 showing the contact between the slab gate and the upstream seat in more detail;
Fig. 7 is a schematic cross-sectional view corresponding to Fig. 5 showing the contact between the slab gate and the upstream and downstream seats in more detail.
Fig. 8 is a schematic cross-sectional view through a longitudinal axis of a closed valve bore of a bi-directional slab gate valve construction, according to an embodiment of the invention, which is under upstream pressure;
Fig. 9 is a schematic cross-sectional view of the upstream annular seat member of the valve of Fig. 8 showing its interaction with an upstream recess and a slab gate member;
Fig. 10 is a schematic cross-sectional view corresponding to Fig. 8 indicating a leak of pressure into the valve cavity;
Fig. 11 is a schematic cross-sectional view corresponding to Fig. 10 showing the contact between the slab gate and the upstream and downstream seats in more detail;
Fig. 12 is a schematic cross-sectional view corresponding to Fig. 8 wherein the valve construction is under a test pressure applied from the valve cavity;
Fig. 13 is a schematic cross-sectional view corresponding to Fig 12 showing the contact between the slab gate and the upstream seat in more detail;
Fig. 14 is a schematic cross-sectional view corresponding to Fig. 12 showing the contact between the slab gate and the upstream and downstream seats in more detail;
Fig. 15 is a schematic cross-sectional view corresponding to Fig. 12 showing the contact between the slab gate and the downstream seat in more detail; and
Fig. 16 is a schematic cross-sectional view of the valve construction of Fig. 8 in a double-block-and-bleed condition.

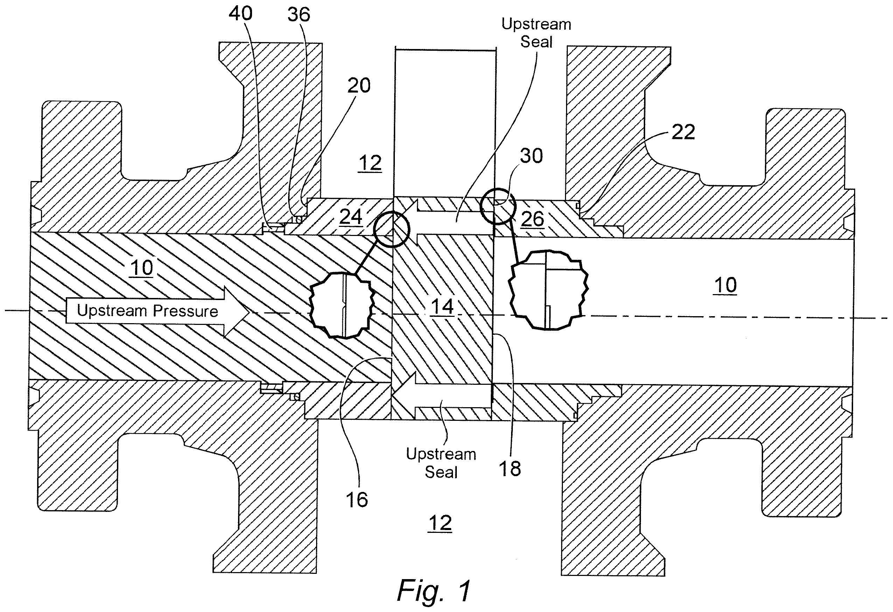

Fig. 1 shows a schematic cross-sectional view through the central longitudinal axis of a cylindrical valve bore (10) of a uni-directional valve construction surrounded by a valve cavity (12). The valve is in a closed condition whereby its slab gate (14) has been moved from the valve cavity (12) into the valve bore (10) in a direction transverse to the longitudinal axis to close the valve bore. The slab gate (14) is provided with opposing gate sealing faces (16, 18) which define the limits of upstream and downstream portions of the valve bore (10) respectively.

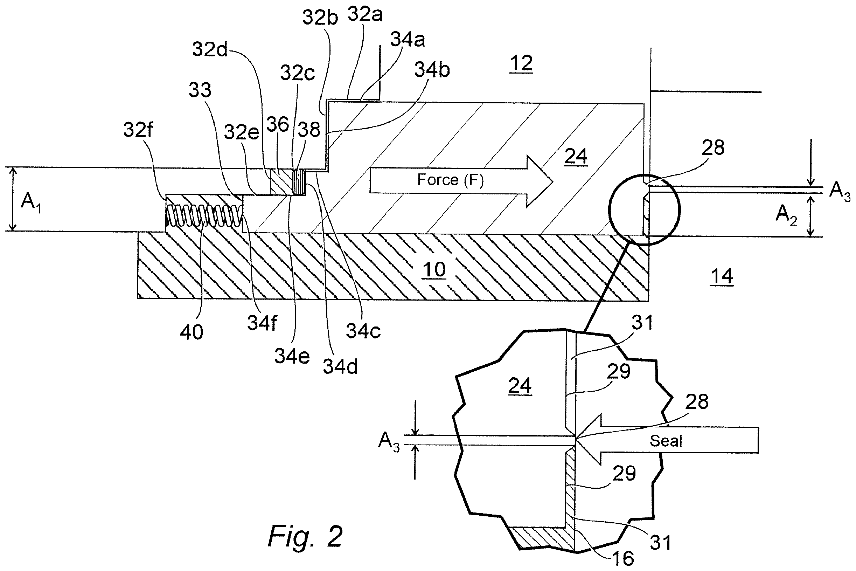

Annular recesses (20, 22) are provided in the valve body around the perimeter of the valve bore (10) proximate the valve cavity (12) and the opposing gate sealing faces (16, 18). Upstream and downstream annular seat members (24, 26) are mounted within the annular recesses (20, 22) and comprise annular seat sealing faces (28, 30) for sealing against the corresponding gate sealing faces (16, 18). The width - measured in the transverse direction - of the annular seat sealing face (28) on the upstream seat member (24) is significantly narrower (see Fig. 2) than the annular seat sealing face (30) on the downstream seat member (26).

As best shown in Fig. 2, the upstream annular recess (20) comprises an end wall at its side lying remote from the gate member (14). When viewed in cross-section, the end wall has a stepped profile and extends between the valve cavity (12) and the upstream portion of the valve bore (10). The stepped profile of the end wall comprises a series of mutually perpendicular longitudinally and transversely extending annular faces (32a-f) as viewed in cross-section through the longitudinal axis of the valve bore (10). The series of annular faces (32a-f) are concentrically arranged about the longitudinal axis of the valve bore such that the width of the upstream recess (20) reduces progressively in a step-wise fashion with increasing transverse distance from the longitudinal axis. It will be appreciated that all longitudinal faces (32a, 32c, 32e) are cylindrical surfaces, and all transverse faces (32b, 32d, 32f) are planar surfaces.

The upstream annular seat member (24) is provided with an upstream wall at a side thereof lying furthest from the annular seat sealing face (28). The upstream wall comprises a series of complementary longitudinally and transversely extending faces (34a-f) each of which lie opposite a corresponding face (32a-f) on the end wall of the upstream annular recess (20). The respective faces (32a-f, 34a-f) define a gap (33) for the passage of fluid between the upstream valve bore (10) and the external valve cavity (12). It will be appreciated that all longitudinal faces (34a, 34c, 34e) are cylindrical surfaces, and all transverse faces (34b, 34d, 34f) are planar surfaces.

The longitudinal face (34a) represents the outermost edge of the upstream annular seat member (24) - relative to the central longitudinal axis of the valve bore - and is longer in the axial direction than the corresponding face (32a) of the upstream annular recess (20). Transverse faces (32b, 32d, 32f) in the end wall of the upstream recess (20) are substantially equal in length - measured in the radial direction - to the corresponding faces (34b, 34d, 34f) of the upstream annular seat member (24). However, longitudinal face (34c) of the upstream annular seat member (24) is shorter than the corresponding face (32c) in the end wall of the upstream recess (20). Consequently, an annular cavity (36) is formed between the respective complementary longitudinal and transverse faces (32c, 32d, 34d, 34e) of the upstream recess (20) and the upstream annular seat member (24).

An annular sealing member (38) is located within the annular cavity (36) and dimensioned so as to simultaneously form a seal against both its longitudinal faces (32c, 34e). In doing so, the annular sealing member (38) closes the fluid gap (33) and provides a seal between the valve bore (10) and the external valve cavity (12) at the upstream end of the upstream annular seat member (24). The relative dimensions of the annular cavity (36) and the annular sealing member (38) are such that the latter is free to move longitudinally between the transverse faces (32d, 34d) of the cavity (36). Therefore, depending upon the fluid pressure differential between the valve bore (10) and the external valve cavity (12), the annular sealing member (38) is either positioned: (i) at the upstream end of the annular cavity (36) where it forms a seal against transverse face (32d) in addition to longitudinal faces (32c, 34e); or (ii) at the downstream end of the annular cavity (36) where it forms a seal against transverse face (34d)) in addition to longitudinal faces (32c, 34e). In the former position, the annular sealing member (38) seals the fluid gap (33) at the junction of the adjacent faces (32d, 34e) of the annular cavity (36). In the latter position, the annular sealing member (38) seals the fluid gap (33) at the junction of the adjacent faces (32c, 34d) of the annular cavity (36). It will therefore be appreciated that, depending upon the aforementioned fluid pressure differential, the annular sealing member (38) provides a seal at one of two different inner and outer annular locations that are spaced from each other in the transverse - i.e. radial - direction.

The narrow annular seat sealing face (28) of the upstream annular seat member (24) protrudes from a surrounding downstream transverse wall (29). A fluid gap (31) is formed between the transverse wall (29) of the upstream annular seat member (24) and the opposing gate sealing face (16) of the slab gate (14). For reasons which are described more fully below, the annular sealing contact area of the annular seat sealing face (28) is less than the annular area of transverse face (34d) on the opposing upstream wall of the upstream seat member (24) within the annular cavity (36). It will be noted that the length of the transverse face (34d) - measured in the transverse direction - corresponds to the annular spacing - also in the transverse direction - between the aforementioned inner and outer sealing locations of the annular sealing member (38).

Furthermore, the narrow annular seat sealing face (28) of the upstream annular seat member (24) protrudes from its surrounding transverse wall (29) at a location spaced from the central longitudinal axis of the valve bore (10) by a transverse - i.e. radial - distance which is: (i) greater than the corresponding distance measured between the central longitudinal axis of the valve bore (10) and the innermost face of the annular cavity (36) defined by longitudinal face (34e) of the upstream seat member (24); but (ii) less than the corresponding distance between the central longitudinal axis of the valve bore (10) and the longitudinal face (34c) of the upstream seat member (24) lying opposite the outermost face of the annular cavity (36) defined by longitudinal face (32c) of the end wall of the upstream annular recess (20). Therefore, the entire narrow annular seat sealing face (28) is located at an intermediate transverse position between the two different predetermined inner and outer annular sealing locations of the annular sealing member (38).

A resilient spring (40) is provided between the innermost transverse faces (32f, 34f) of the end wall of the upstream annular recess (20) and the upstream wall of the upstream seat member (24) respectively. The resilient spring (40) urges the upstream seat member (24) towards the slab gate (14).

In use, pressure within the upstream valve bore (10) passes through the fluid gap (33) but is prevented from reaching the external valve cavity (12) by the annular sealing member (38). The pressure differential between the valve bore (10) and the external valve cavity (12) causes the annular sealing member (38) to be positioned at the downstream end of the annular cavity (as shown in Fig. 2) so as to provide a seal at the outer annular location described above. Accordingly, fluid pressure within the annular cavity (36) acts on its transverse face (34d) - via the annular sealing member (38) - as well as against the innermost transverse face (34f) of the upstream wall of the upstream seat member (24).

Simultaneously, pressure within the upstream valve bore (10) passes through the fluid gap (31) but is prevented from reaching the external valve cavity (12) by the narrow annular seat sealing face (28) which seals against gate sealing face (16) of the slab gate (14).

The sum of the annular areas (A₁) of the transverse faces (34d, 34f) on the upstream wall of the upstream seat member (24) is greater than the annular area (A₂) on the innermost part of its downstream wall (29) that is exposed to the pressure within the valve bore (10). Since the same pressure is acting in opposite directions on two different surface areas of the upstream seat member (24), the resultant unbalanced load creates a net force F in the direction of the slab gate (14). The net force F is supported by the relatively smaller area (A₃) of the narrow annular seat sealing face (28).

When A₁ > A₂ > A₃ and A₁ > (A₂ + A₃), the net force F must always be greater than the pressure within the upstream valve bore (10) thus ensuring an effective seal between the annular seat sealing face (28) and the gate sealing face (16) of the slab gate (14). Indeed, net force F varies in direct proportion to the upstream pressure so as to ensure a constant sealing safety factor over a wide upstream pressure range.

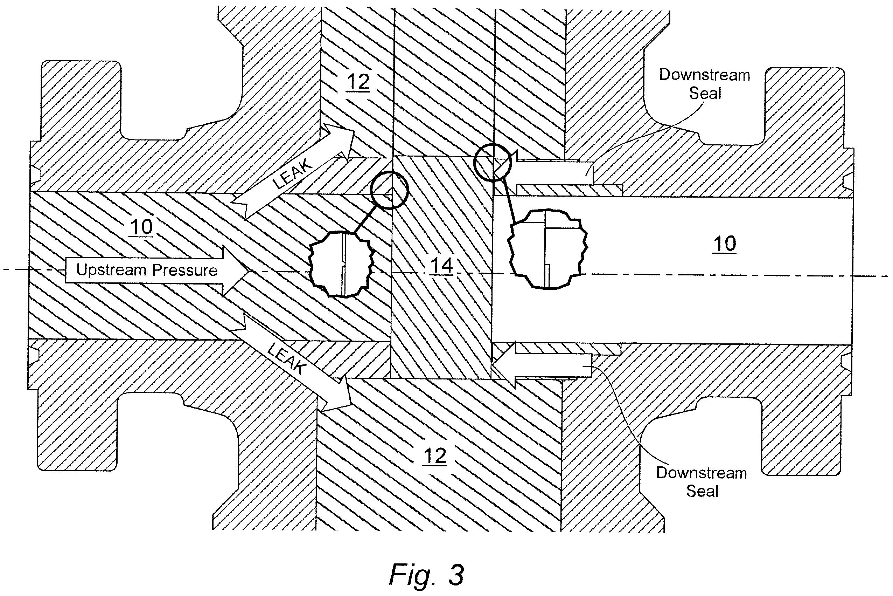

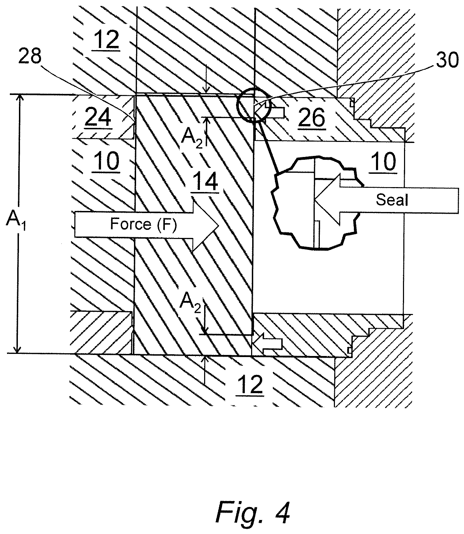

Figs. 3 and 4 depict a failure of the annular sealing member (38) associated with the upstream seat member (24) resulting in an equalisation - via the fluid gap (33) - of the pressure between the valve bore (10) and the external valve cavity (12). Consequently, fluid pressure acts on all transverse faces (34b, 34d, 34f) of the upstream seat member (24) and over the exposed surface area of the upstream gate sealing face (16), i.e. substantially its entire surface area.

The pressure differential between the upstream and downstream sides of the slab gate (14) forces its downstream gate sealing face (18) onto the annular seat sealing face (30) of the downstream seat member (26). Again, the net force F varies in direct proportion to the upstream pressure thus ensuring a constant sealing safety factor over a wide upstream pressure range. Importantly, the net force F is supported by the wider annular contact area (A₂) of the annular seat sealing face (30) of the downstream seat member (26). Without a wider contact area the material of the seat and gate would locally collapse. This is because the narrower annular seat sealing face (28) on the upstream seat member (24) is pressure energised over only a hollow annulus area, whereas the annular seat sealing face (30) of the downstream seat member (26) is pressure energised over a much larger solid circular area. The resultant net Force F from pressure acting over the solid area is thus significantly higher than that acting over the annulus requiring a corresponding increase in contact face width (and hence area, A₂) to maintain the contact stress within material design parameters.

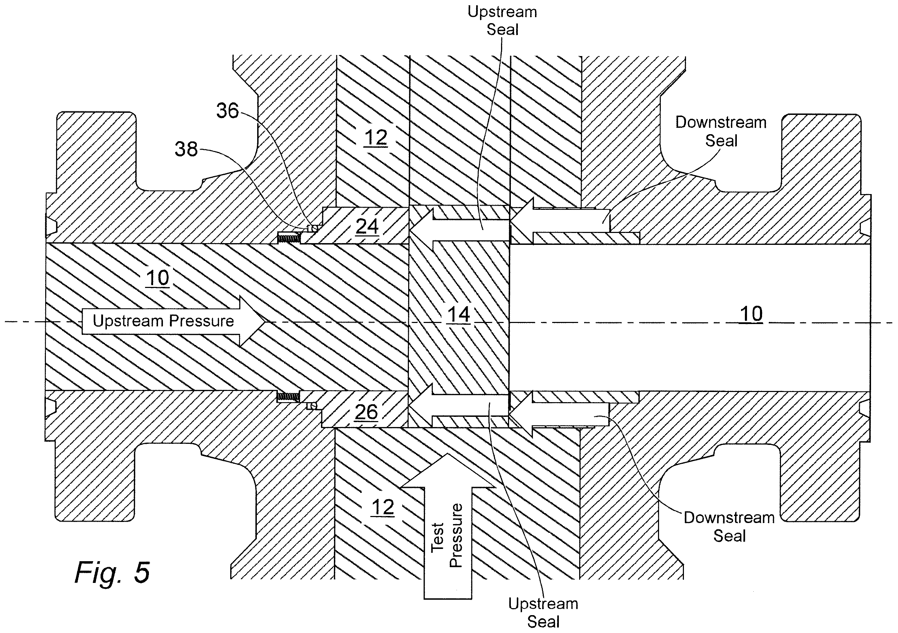

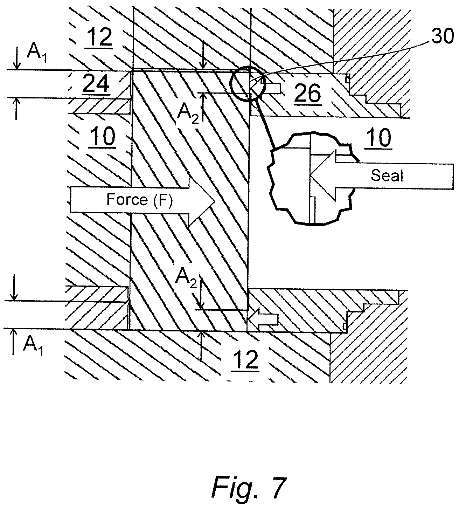

Figs 5 to 7 depict the valve construction in a test condition whereby a test pressure is introduced into the external valve cavity (12) in order to verify the integrity of the upstream and downstream seat members (24, 26). The test pressure is greater than the upstream pressure which, during test, may lie anywhere between zero and the rated working pressure of the valve.

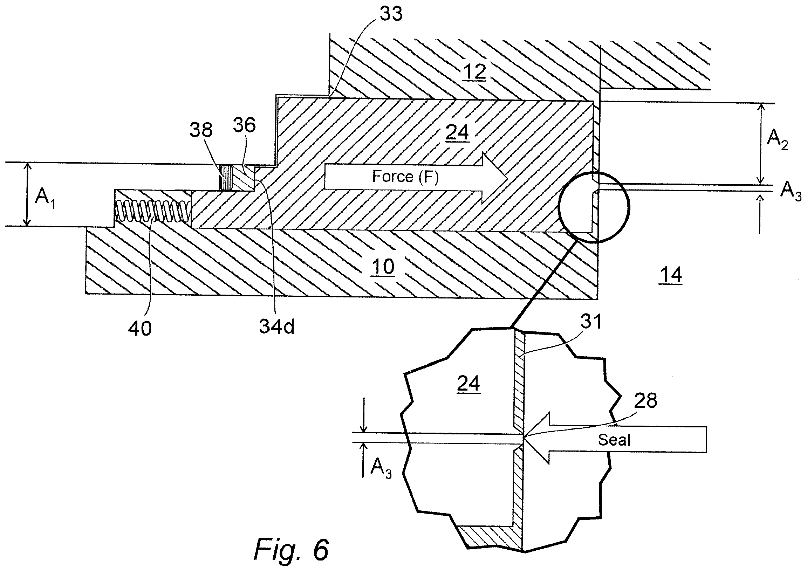

In use, the test pressure within the external valve cavity (12) passes through the fluid gap (33) but is prevented from reaching the upstream valve bore (10) by the annular sealing member (38). The pressure differential between the valve bore (10) and the external valve cavity (12) causes the annular sealing member (38) to be positioned at the upstream end of the annular cavity (as shown in Figs. 5 and 6) so as to provide a seal at the inner annular location described above. Accordingly, fluid pressure within the annular cavity (36) acts directly on its transverse face (34d) as well as against the outermost transverse face (34b) of the upstream wall of the upstream seat member (24).

Simultaneously, the test pressure within the external valve cavity (12) passes through the fluid gap (31) but is prevented from reaching the upstream valve bore (10) by the narrow annular seat sealing face (28) which seals against gate sealing face (16) of the slab gate (14).

The sum of the annular areas (A₁) of the transverse faces (34b, 34d) on the upstream wall of the upstream seat member (24) is greater than the annular area (A₂) on the outermost part of its downstream wall (29) that is exposed to the higher pressure within the external valve cavity (12). Since the same pressure is acting in opposite directions on two different surface areas of the upstream seat member (24), the resultant unbalanced load creates a net force F in the direction of the slab gate (14). The net force F is supported by the relatively smaller area (A₃) of the narrow annular seat sealing face (28).

When A₁ > A₂ > A₃ and A₁ > (A₂ + A₃), the net force F must always be greater than the test pressure within the external valve cavity (12) thus ensuring an effective seal between the annular seat sealing face (28) and the upstream gate sealing face (16) of the slab gate (14). Indeed, net force F varies in direct proportion to the test pressure so as to verify the integrity of the upstream seat member (24) over a wide test pressure range.

The test pressure within the fluid gap (31) also acts in the downstream direction over annular area A₁ forcing the slab gate (14) onto the downstream seat member (26). This downstream force is supported by the annular seat sealing face (30) of the downstream seat member (26) having an area A₂. Since A₁ > A₂, the net force F must always be greater than the test pressure within the external valve cavity (12) thus ensuring an effective seal between the annular seat sealing face (30) and the downstream gate sealing face (18) of the slab gate (14). Indeed, net force F varies in direct proportion to the test pressure so as to verify the integrity of the downstream seat member (26) over a wide test pressure range. As the upstream pressure tends to zero, the width of the annular seat sealing face (30) of the downstream seat member (26) is not too important. However, as the upstream pressure increases, the annulus area A₂ has to support not only the pressure acting on annulus area A₁ but also that acting on the circular gate area at the bore out to area A₁. This increased force would cause the seat and gate to locally collapse if the contact area was not relatively wider so as to withstand the contact stress within material design parameters.

Even if the pressure within the upstream valve bore (10) is reduced to zero, the net force imbalance in the downstream direction maintains the integrity of the seal between the annular seat sealing face (30) and the downstream gate sealing face (18) of the slab gate (14). This seal is further enhanced by the action of the aforementioned resilient spring (40) that urges the upstream seat member (24) against the slab gate (14) which in turn is urged against the annular seat sealing face (30).

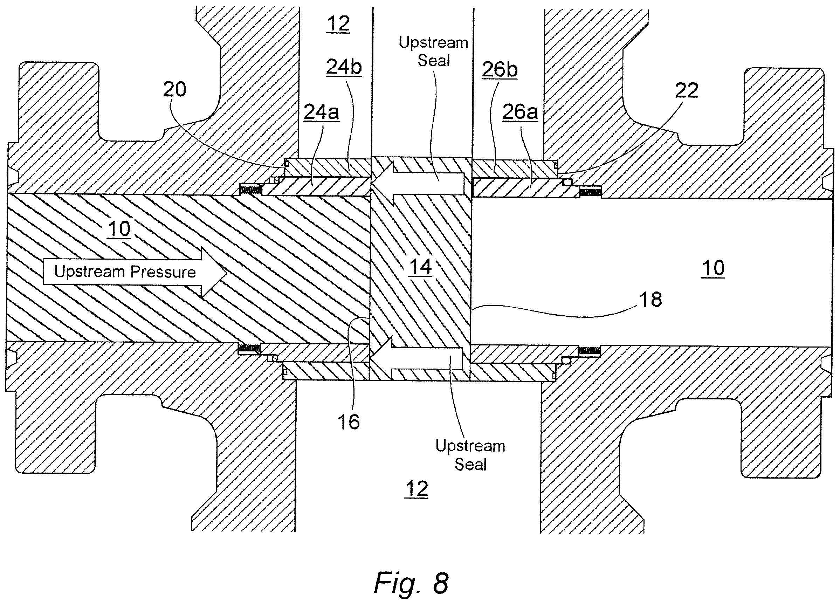

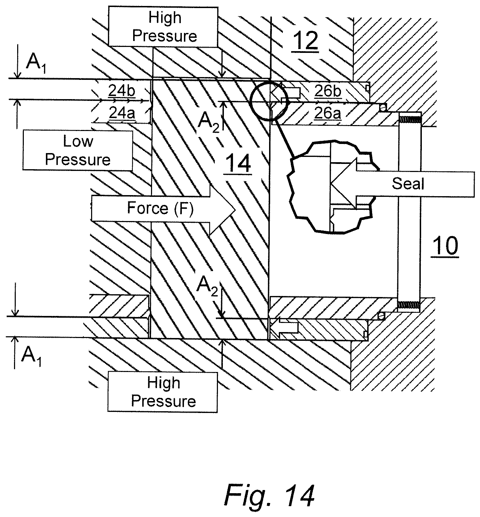

Operating the valve construction of Figs. 1 to 7 in the opposite flow direction (i.e. right to left as viewed in the Figs.) would result in the immediate destruction of the valve seat (26) at both the annular seat sealing face (28) on the upstream seat member (24), and the gate sealing face (16). An embodiment of the present invention illustrated schematically in Figs. 8 to 16 is capable of withstanding bi-directional forces within the valve bore (10).

Fig. 8 shows a schematic cross-sectional view through the central longitudinal axis of a cylindrical valve bore of a bi-directional valve construction where parts equivalent to those shown in the embodiment of Figs. 1 to 7 have been given like reference numerals. Indeed, since the only differences between the valve constructions of Figs 1 and 8 are to be found in the construction of the upstream and downstream seat members the following description will focus primarily on those differences.

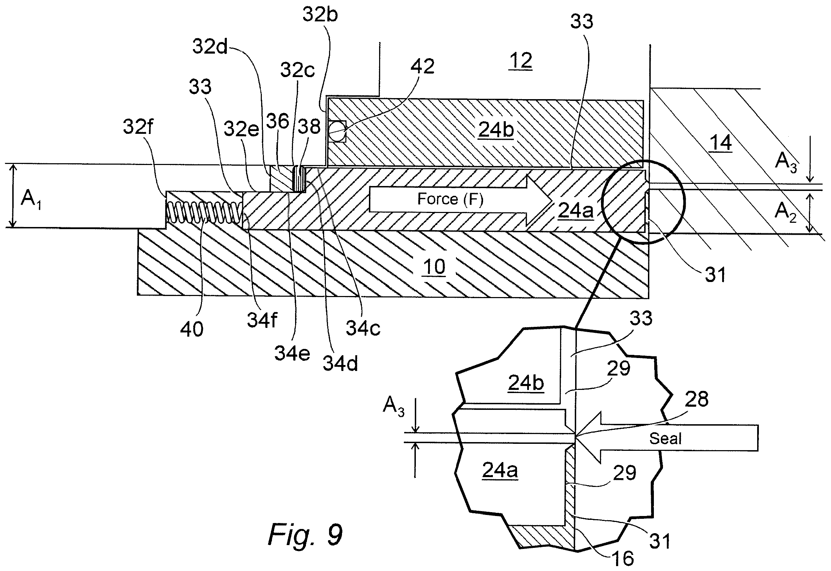

As described above in connection with the embodiment of Figs. 1 to 7, annular recesses (20, 22) are provided in the valve body around the perimeter of the valve bore (10) proximate the valve cavity (12) and the opposing gate sealing faces (16, 18). However, the upstream and downstream annular seat members mounted therein are each formed in two parts, namely: (i) an inner moveable seat portion (24a, 26a); and (ii) an outer seat portion (24b, 26b) which is substantially fixed. Each inner moveable seat portion (24a, 26a) comprises an annular seat sealing faces (28) for sealing against its corresponding gate sealing face (16, 18). The width - measured in the transverse direction - of the annular seat sealing face (28) on each moveable seat portion (24a, 26a) is significantly narrower than the corresponding annular seat sealing face (30) on each outer fixed seat portion (24b, 26b). Each inner moveable seat portion (24a, 26a) is moveable in the longitudinal direction relative to its corresponding outer fixed seat portion (24b, 26b). The respective faces (32c-f, 34c-f) define the gap (33) for the passage of fluid between the valve
bore (10) and the external valve cavity (12). Permanent seals (42) are positioned between the outermost transverse faces (32b) of the end wall of each recess (20, 22) and the corresponding fixed seat portions (24b, 26b). Therefore, rather than following the path of the end wall of each recess (20, 22) the fluid gap (33) extends between each annular cavity (36) and the external valve cavity (12) via a space lying between each inner moveable seat portion and its corresponding outer fixed seat portion (as best seen in Fig. 9).

In use, a higher pressure within the valve bore (10) to the left of the slab gate (14) - as viewed in Fig. 9 - passes through the fluid gap (33) but is prevented from reaching the external valve cavity (12) by the annular sealing member (38). The pressure differential between the valve bore (10) and the external valve cavity (12) causes the annular sealing member (38) to be positioned at the downstream end of the annular cavity (as shown in Fig. 9) so as to provide a seal at the outermost annular location described above. Accordingly, fluid pressure within the annular cavity (36) acts on its transverse face (34d) - via the annular sealing member (38) - as well as against the innermost transverse face (34f) of the upstream wall of the inner moveable seat portion (24a).

Simultaneously, pressure within the upstream valve bore (10) passes through the fluid gap (31) but is prevented from reaching the external valve cavity (12) by the narrow annular seat sealing face (28) which seals against gate sealing face (16) of the slab gate (14).

The sum of the annular areas (A₁) of the transverse faces (34d, 34f) on the upstream wall of the inner moveable seat portion (24a) is greater than the annular area (A₂) on the innermost part of its downstream wall (29) that is exposed to the pressure within the valve bore (10). Since the same pressure is acting in opposite directions on two different surface areas of the inner moveable seat portion (24a), the resultant unbalanced load creates a net force F in the direction of the slab gate (14). The net force F is supported by the relatively smaller area (A₃) of the narrow annular seat sealing face (28).

When A₁ > A₂ > A₃ and A₁ > (A₂ + A₃), the net force F must always be greater than the pressure within the upstream valve bore (10) thus ensuring an effective seal between the inner moveable seat portion (24a) and the gate sealing face (16) of the slab gate (14). Indeed, net force F varies in direct proportion to the upstream pressure so as to ensure a constant sealing safety factor over a wide upstream pressure range in a similar manner to that described above in relation to Fig. 2.

If a higher pressure within the valve bore (10) is instead applied from the right of the slab gate (14) - as viewed in Fig. 9 - then the operation of the valve would be exactly the same on the opposite side of the slab gate (14). In both cases, the outer fixed seat portions (24b, 26b) do not provide any function.

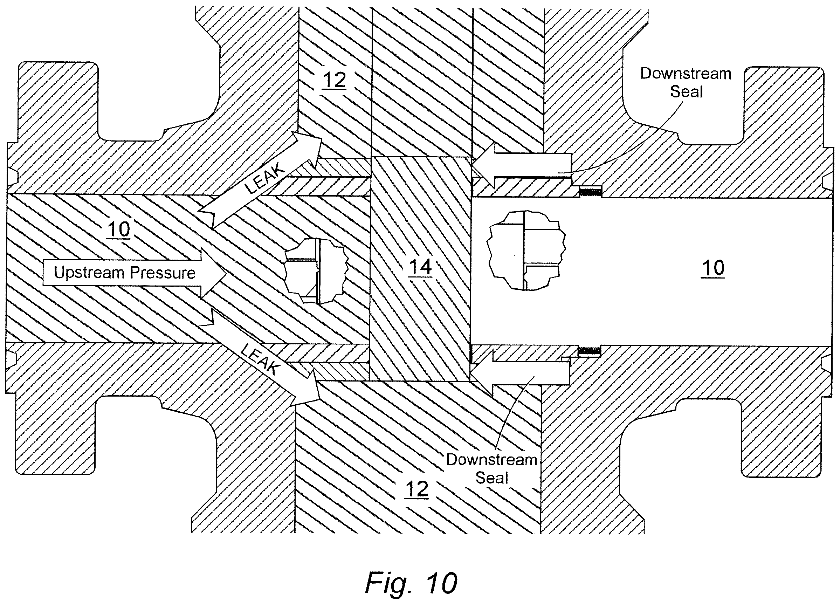

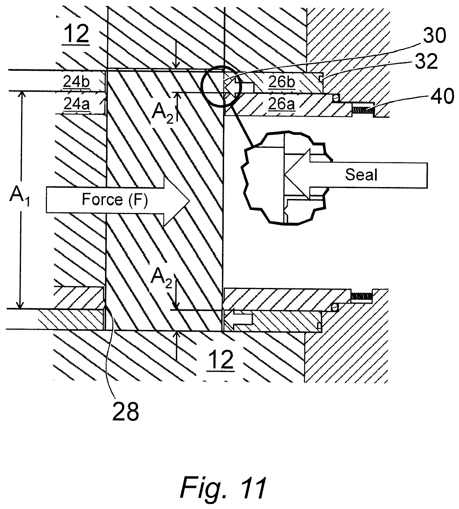

Figs. 10 and 11 depict a failure of the annular sealing member (38) associated with the inner moveable seat portion (24a) resulting in an equalisation - via the fluid gap (33) - of the pressure between the valve bore (10) and the external valve cavity (12). This is analogous to the condition described above with reference to Figs 3 and 4. Consequently, fluid pressure acts on both transverse faces (34d, 34f) of the inner moveable seat portion (24a) and over the exposed surface area of gate sealing face (16), i.e. substantially its entire surface area.

The pressure differential between the upstream and downstream sides of the slab gate (14) forces its downstream gate sealing face (18) onto the annular seat sealing face (30) of the downstream outer fixed seat portion (26b). Since the downstream inner moveable seat portion (26a) is free to "float" with any movement of the gate in the longitudinal direction, this prevents damage to its narrow annular seat sealing face (28). Again, the net force F varies in direct proportion to the upstream pressure thus ensuring a constant sealing safety factor over a wide upstream pressure range.

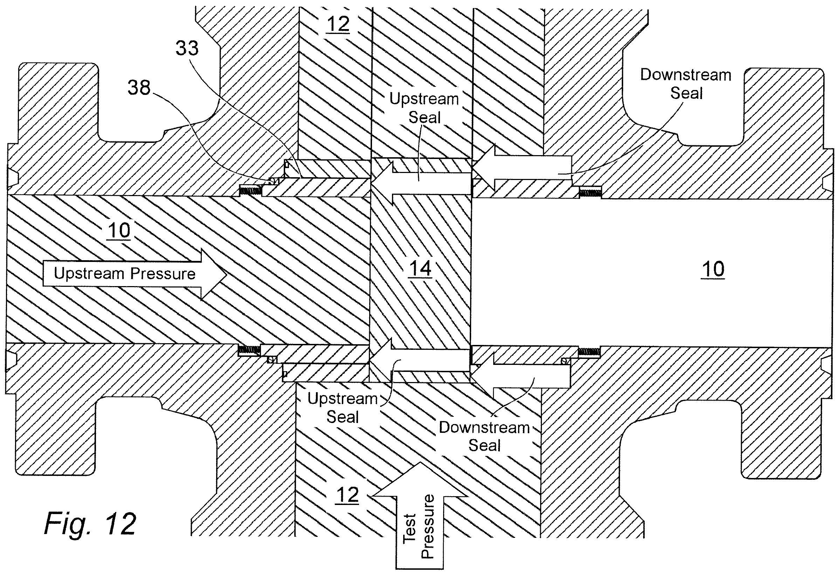

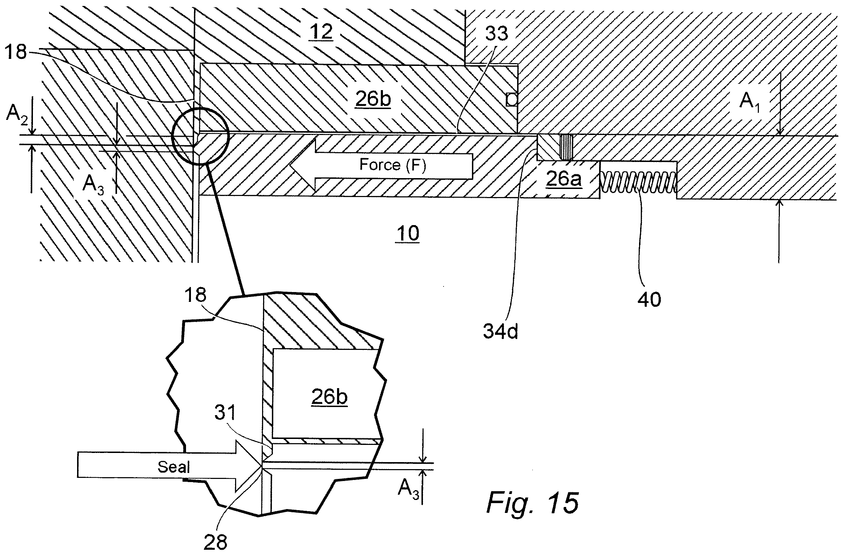

Figs 12 to 15 depict the valve construction in a test condition whereby a test pressure is introduced into the external valve cavity (12) in order to verify the integrity of the upstream and downstream seat members. This is analogous to the condition described above with reference to Figs 5 to 7. The test pressure is greater than the upstream pressure which, during test, may lie anywhere between zero (see Fig. 15) and the rated working pressure of the valve. In the examples shown in Figs. 12 to 14, the upstream pressure, i.e. to the left of the slab gate (14), is higher than the downstream pressure.

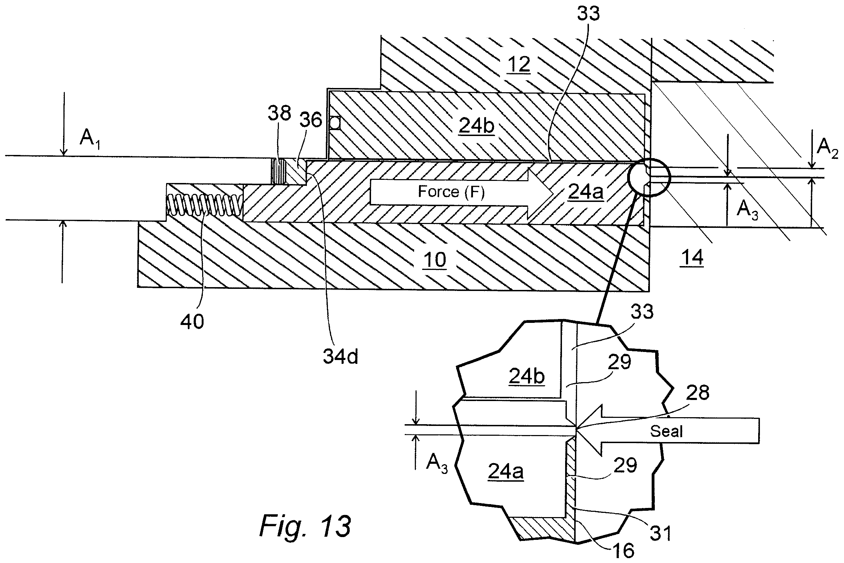

In use, the test pressure within the external valve cavity (12) passes through the fluid gap (33) - between the inner moveable and outer fixed seat portions (24a, 24b) - but is prevented from reaching the valve bore (10) by the annular sealing member (38). The pressure differential between the valve bore (10) and the external valve cavity (12) causes the annular sealing member (38) to be positioned at the upstream end of the annular cavity (35) (as best shown in Fig. 13) so as to provide a seal at the innermost annular location described above. Accordingly, fluid pressure within the annular cavity (36) acts directly on its transverse face (34d) of the upstream wall of the inner moveable seat portion (24a).

Simultaneously, the test pressure within the external valve cavity (12) passes through the fluid gap (31) but is prevented from reaching the upstream valve bore (10) by the narrow annular seat sealing face (28) which seals against gate sealing face (16) of the slab gate (14).

Annular area (A₁) of the transverse face (34d) on the upstream wall of the inner moveable seat portion (24a) is greater than the annular area (A₂) on the outermost part of its downstream wall (29) that is exposed to the higher pressure within the external valve cavity (12). Since the same pressure is acting in opposite directions on two different surface areas of the inner moveable seat portion (24a), the resultant unbalanced load creates a net force F in the direction of the slab gate (14). The net force F is supported by the relatively smaller area (A₃) of the narrow annular seat sealing face (28).

When A₁ > A₂ > A₃ and A₁ > (A₂ + A₃), the net force F must always be greater than the test pressure within the external valve cavity (12) thus ensuring an effective seal between the annular seat sealing face (28) and the upstream gate sealing face (16) of the slab gate (14). As before, the net force F varies in direct proportion to the test pressure so as to verify the integrity of the inner moveable seat portion (24a) over a wide test pressure range.

The test pressure within the fluid gap (31) also acts in the downstream direction over annular area A₁ forcing the slab gate (14) onto the inner moveable and outer fixed seat portions (26a, 26b). This downstream force is supported by the annular seat sealing face (30) of the downstream outer fixed seat portion (26b) having an area A₂. Since A₁ > A₂, the net force F must always be greater than the test pressure within the external valve cavity (12) thus ensuring an effective seal between the annular seat sealing face (30) and the downstream gate sealing face (18) of the slab gate (14). Indeed, net force F varies in direct proportion to the test pressure so as to verify the integrity of the downstream outer fixed seat portion (26b) over a wide test pressure range.

In the absence of any pressure differential across the slab gate (14) - as indicated in Fig. 15 - the gate sits in a neutral, central position whereby it does not contact either of the two outer fixed seat portions (24b, 26b). A test pressure applied to the valve cavity (12) passes through the fluid gap (33) - between the inner moveable and outer fixed seat portions (26a, 26b) - but is prevented from reaching the valve bore (10) by the annular sealing member (38). The pressure differential between the valve bore (10) and the external valve cavity (12) causes the annular sealing member (38) to be forced back against the end wall of annular cavity (35) so as to provide a seal at the innermost annular location described above. Accordingly, fluid pressure within the annular cavity (36) acts directly on its transverse face (34d) of the transverse wall of the inner moveable seat portion (26a).

Simultaneously, the test pressure within the external valve cavity (12) passes through the fluid gap (31) but is prevented from reaching the valve bore (10) by the narrow annular seat sealing face (28) which seals against gate sealing face (16) of the slab gate (14).

Annular area (A₁) of the transverse face (34d) on the upstream wall of the inner moveable seat portion (26a) is greater than the annular area (A₂) on the outermost part of its transverse wall (29) that is exposed to the higher pressure within the external valve cavity (12). Since the same pressure is acting in opposite directions on two different surface areas of the inner moveable seat portion (26a), the resultant unbalanced load creates a net force F in the direction of the slab gate (14). The net force F is supported by the relatively smaller area (A₃) of the narrow annular seat sealing face (28).

When A₁ > A₂ > A₃ and A₁ > (A₂ + A₃), the net force F must always be greater than the test pressure within the external valve cavity (12) thus ensuring an effective seal between the annular seat sealing face (28) and the gate sealing face (18) of the slab gate (14). As before, the net force F varies in direct proportion to the test pressure so as to verify the integrity of the inner moveable seat portion (26a) over a wide test pressure range.

In view of the symmetry involved when there is no pressure differential across the slab gate (14), it will be appreciated that same occurs on the other side of the gate. When only a small pressure differential exists across the slab gate (14), sealing occurs across an outer fixed seat portion as already described above and the inner moveable seat portion - aided by the action of its resilient spring (40) - provides a secondary back up.

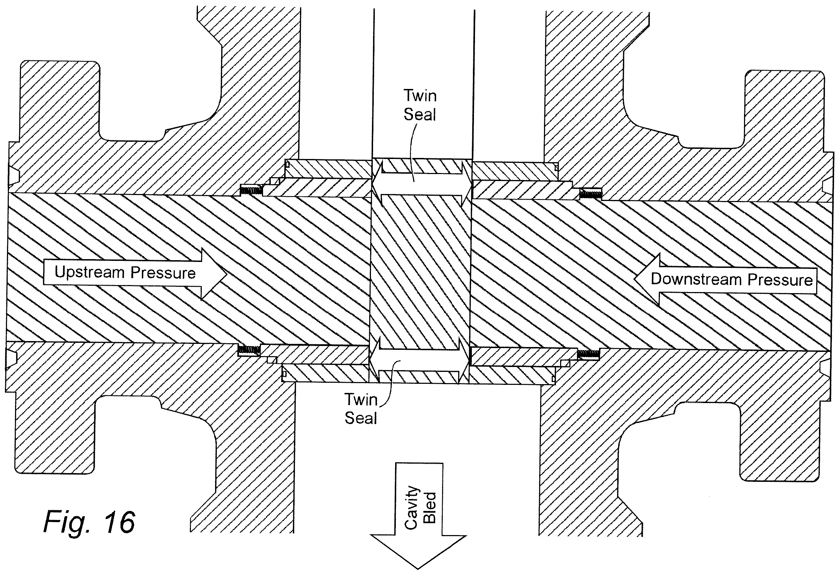

A further advantageous feature of the invention is illustrated schematically in Fig. 16 whereby the valve is capable of isolating in both directions when the external valve cavity pressure is bled to zero - i.e. a double block-and-bleed configuration. The operation of the valve in this configuration is the same as described above with respect to Figs. 8 and 9 except that inner moveable seat portions (24a, 26a) operate simultaneously on both sides of the slab gate (14).

Modifications and improvements may be made to the foregoing without departing from the scope of the present invention as defined by the claims.

## Claims

1. A bi-directional gate valve comprising:
(i) a valve body having a valve bore (10) extending therethrough along an axis;
(ii) a valve cavity (12) surrounding the valve bore;
(iii) a gate member (14) operable within the valve body to open and close the valve bore;
(iv) opposed gate sealing faces (16, 18) provided on the gate member;
(v) an annular recess (20, 22) provided around the perimeter of the valve bore proximate each of the opposed gate sealing faces of the gate member;
**characterised in that** the valve further comprises
(vi) an annular seat member mounted within each recess comprising of an outer fixed seat portion (24b, 26b) and an inner moveable seat portion (24a, 26a);
(vii) an annular seat sealing face (28) provided on each inner moveable seat portion (24a, 26a) for sealing against a corresponding gate sealing face;
(viii) end walls (32a-f) provided on the valve body remote from the opposed gate sealing faces of the gate member and extending between the valve cavity (12) and the valve bore (10);
(ix) at least one annular sealing member (38) for selectively sealing at two different predetermined annular locations between the end wall proximate one recess (32d) and an opposing wall (34d) of its corresponding inner moveable seat portion (24a); and
(x) at least one annular sealing member for selectively sealing at two different predetermined annular locations between the end wall proximate the other recess (22) and an opposing wall of its corresponding inner moveable seat portion (26a);
wherein the seat sealing face (28) of each inner moveable seat portion (24a, 26a) protrudes from a surrounding transverse wall (29) and has an annular sealing contact area (A₃) which is less than an annular area on the corresponding opposing wall (34d) which is defined between said two different predetermined annular sealing locations; and wherein the annular sealing contact area (A₃) of the seat sealing face (28) of each inner moveable seat portion (24a, 26a) is located at an intermediate transverse position between the two different predetermined annular sealing locations of its at least one annular sealing member.

2. A bi-directional gate valve as claimed in claim 1, wherein each outer fixed seat portion (24b, 26b) is permanently sealed against the end wall of its corresponding recess.

3. A bi-directional gate valve as claimed in claim 1 or 2, wherein the annular sealing contact area (A₂) of the seat sealing face of each outer fixed seat portion (24b, 26b) is greater than the corresponding annular sealing contact area (A₃) of each inner moveable seat portion (24a, 26a).

4. A bi-directional gate valve as claimed in any preceding claim, wherein the outer fixed seat portion and the inner moveable seat portion of each annular seat member are separated by a gap (33) for the passage of fluid.

5. A bi-directional gate valve as claimed in any preceding claim, wherein a resilient means (40) is provided between a transverse face of the end wall (32f) of each recess and an opposing wall (34f) of the corresponding inner moveable seat portion for urging the inner moveable seat portion towards the gate member (14).

6. A bi-directional gate valve as claimed in any preceding claim, wherein each end wall has a stepped profile comprising a series of mutually perpendicular longitudinal and transverse faces (32a-f) when viewed in cross-section through the axis of the valve bore (10) and wherein the opposing walls of each annular seat member comprise complementary longitudinal and transverse faces (34a-f).

7. A bi-directional gate valve as claimed in claim 6, wherein a cavity (36) is formed between the respective complementary longitudinal and transverse faces of each inner moveable seat portion (34d, 34e) and the corresponding opposing faces of its recess end wall (32c, 32d).

8. A bi-directional gate valve as claimed in claim 7, wherein each at least one annular sealing member (38) is located within its corresponding cavity (36) for selectively sealing at an inner or an outer annular location therein.

## Patentansprüche

1. Bidirektionales Absperrventil, aufweisend:
(i) einen Ventilkörper mit einer Ventilbohrung (10), die sich entlang einer Achse durch ihn erstreckt;
(ii) einen Ventilhohlraum (12), der die Ventilbohrung umgibt;
(iii) ein Klappenelement (14), das in dem Ventilkörper zum Öffnen und Schließen der Ventilbohrung bedienbar ist;
(iv) gegenüberstehende Klappenabdichtflächen (16, 18), die auf dem Klappenelement bereitgestellt sind;
(v) eine ringförmige Ausnehmung (20, 22), die um den Umfang der Ventilbohrung angrenzend an jede der gegenüberstehenden Klappenabdichtflächen des Klappenelements bereitgestellt ist;
**dadurch gekennzeichnet, dass** das Ventil ferner aufweist:
(vi) ein ringförmiges Sitzelement, das in jeder Ausnehmung angebracht ist und einen äußeren festen Sitzabschnitt (24b, 26b) und einen inneren beweglichen Sitzabschnitt (24a, 26a) aufweist;
(vii) eine ringförmige Sitzabdichtfläche (28), die auf jedem inneren beweglichen Sitzabschnitt (24a, 26a) zum Abdichten gegen eine entsprechende Klappenabdichtfläche bereitgestellt ist;
(viii) Endwände (32a-f), die auf dem Ventilkörper von den gegenüberstehenden Klappenabdichtflächen des Klappenelements entfernt angeordnet bereitgestellt sind und sich zwischen dem Ventilhohlraum(12) und der Ventilbohrung (10) erstrecken;
(ix) mindestens ein ringförmiges Dichtelement (38) zum selektiven Abdichten an zwei verschiedenen vorbestimmten ringförmigen Stellen zwischen der Endwand, die einer Ausnehmung (32d) benachbart ist, und einer gegenüberliegenden Wand (34d) ihres inneren beweglichen Sitzabschnitts (24a); und
(x) mindestens ein ringförmiges Dichtelement zum selektiven Abdichten an zwei verschiedenen vorbestimmten ringförmigen Stellen zwischen der Endwand, die der anderen Ausnehmung (22) benachbart ist, und einer gegenüberliegenden Wand ihres inneren beweglichen Sitzabschnitts (26a);
wobei die Sitzabdichtfläche (28) jedes inneren beweglichen Sitzabschnitts (24a, 26a) von einer umgebenden quer verlaufenden Wand (29) vorspringt und einen ringförmigen Abdichtkontaktbereich (A₃) hat, der kleiner als ein ringförmiger Bereich auf der entsprechenden gegenüberliegenden Wand (34d) ist, der zwischen den beiden verschiedenen vorbestimmten ringförmigen Abdichtstellen definiert ist; und wobei der ringförmige Abdichtkontaktbereich(A₃) der Abdichtfläche (28) jedes inneren beweglichen Sitzabschnitts (24a, 26a) sich an einer dazwischen liegenden Querstellung zwischen den beiden verschiedenen vorbestimmten ringförmigen Abdichtstellen des mindestens einen ringförmigen Abdichtelements befindet.

2. Bidirektionales Absperrventil nach Anspruch 1, wobei jeder äußere feste Sitzabschnitt (24b, 26b) permanent gegen die Endwand seiner entsprechenden Ausnehmung abgedichtet ist.

3. Bidirektionales Absperrventil nach Anspruch 1 oder 2, wobei der ringförmige Abdichtkontaktbereich (A₂) der Sitzabdichtfläche jedes äußeren festen Sitzabschnitts (24b, 26b) größer als der entsprechende ringförmige Abdichtkontaktbereich (A₃) jedes inneren beweglichen Sitzabschnitts (24a, 26a) ist.

4. Bidirektionales Absperrventil nach einem der vorhergehenden Ansprüche, wobei der äußere feste Sitzabschnitt und der innere bewegliche Sitzabschnitt jedes ringförmigen Sitzelements durch einen Spalt (33) für den Durchlass von Fluid getrennt sind.

5. Bidirektionales Absperrventil nach einem der vorhergehenden Ansprüche, wobei ein elastisches Mittel (40) zwischen einer quer verlaufenden Fläche der Endwand (32f) jeder Ausnehmung und einer gegenüberliegenden Wand (34f) des entsprechenden inneren beweglichen Sitzabschnitts bereitgestellt ist, um den inneren beweglichen Sitzabschnitt zum Klappenelement (14) hin zu zwingen.

6. Bidirektionales Absperrventil nach einem der vorhergehenden Ansprüche, wobei jede Endwand ein Stufenprofil hat, das im Querschnitt durch die Achse der Ventilbohrung (10) gesehen eine Reihe von gegenseitig senkrechten längs und quer verlaufenden Flächen (32a-f) aufweist, und wobei die gegenüberliegenden Wände jedes ringförmigen Sitzelements komplementäre längs und quer verlaufende Flächen (34a-f) aufweisen.

7. Bidirektionales Absperrventil nach Anspruch 6, wobei ein Hohlraum (36) zwischen den jeweiligen komplementären längs und quer verlaufenden Flächen jedes inneren beweglichen Sitzabschnitts (34d, 34e) und den entsprechenden gegenüberliegenden Flächen seiner Ausnehmungsendwand (32c, 32d) gebildet wird.

8. Bidirektionales Absperrventil nach Anspruch 7, wobei jedes mindestens eine ringförmige Abdichtelement (38) sich in seinem entsprechenden Hohlraum (36) befindet, um selektiv eine darin befindliche innere oder eine äußere ringförmige Stelle abzudichten.

## Revendications

1. Robinet-vanne bidirectionnel comprenant :
(i) un corps de robinet comportant un orifice de robinet (10) qui s'étend à travers celui-ci le long d'un axe ;
(ii) une cavité de robinet (12) entourant l'orifice de robinet ;
(iii) un élément vanne (14) servant, à l'intérieur du corps de robinet, à ouvrir et fermer l'orifice de robinet ;
(iv) des faces d'étanchéité de vanne opposées (16, 18) disposées sur l'élément vanne ;
(v) un évidement annulaire (20, 22) disposé autour du périmètre de l'orifice de robinet proche de chacune des faces d'étanchéité de vanne opposées de l'élément vanne ;
**caractérisé en ce que** le robinet comprend en outre :
(vi) un élément siège annulaire monté dans chaque évidement comprenant une partie de siège fixe externe (24b, 26b) et une partie de siège mobile interne (24a, 26a) ;
(vii) une face d'étanchéité de siège annulaire (28) disposée sur chaque partie de siège mobile interne (24a, 26a) pour assurer l'étanchéité contre une face d'étanchéité de vanne correspondante ;
(viii) des parois d'extrémité (32a-f) disposées sur le corps de robinet éloignées des faces d'étanchéité de vanne opposées de l'élément vanne et s'étendant entre la cavité de robinet (12) et l'orifice de robinet (10) ;
(ix) au moins un élément d'étanchéité annulaire (38) pour assurer l'étanchéité de manière sélective au niveau de deux emplacements annulaires prédéfinis différents entre la paroi d'extrémité proche d'un évidement (32d) et une paroi opposée (34d) de sa partie de siège mobile interne correspondante (24a) ; et
(x) au moins un élément d'étanchéité annulaire pour sceller sélectivement au niveau de deux emplacements annulaires prédéfinis différents entre la paroi d'extrémité proche de l'autre évidement (22) et une paroi opposée de sa partie de siège mobile interne correspondante (26a) ;
ladite face d'étanchéité de siège (28) de chaque partie de siège mobile interne (24a, 26a) faisant saillie depuis une paroi transversale périphérique (29) et possédant une zone de contact d'étanchéité annulaire (A₃) qui est inférieure à une zone annulaire sur la paroi opposée correspondante (34d) qui est définie entre lesdits deux emplacements d'étanchéité annulaires prédéfinis différents ; et ladite zone de contact d'étanchéité annulaire (A₃) de la face d'étanchéité de siège (28) de chaque partie de siège mobile interne (24a, 26a) se trouvant au niveau d'une position transversale intermédiaire entre les deux emplacements d'étanchéité annulaire prédéfinis différents de son au moins un élément d'étanchéité annulaire.

2. Robinet-vanne bidirectionnel selon la revendication 1, chaque partie de siège fixe externe (24b, 26b) étant scellée de façon permanente contre la paroi d'extrémité de son évidement correspondant.

3. Robinet-vanne bidirectionnel selon la revendication 1 ou 2, ladite zone de contact d'étanchéité annulaire (A₂) de la face d'étanchéité de siège de chaque partie de siège fixe externe (24b, 26b) étant supérieure à la zone de contact d'étanchéité annulaire correspondante (A₃) de chaque partie de siège mobile interne (24a, 26a).

4. Robinet-vanne bidirectionnel selon l'une quelconque des revendications précédentes, ladite partie de siège fixe externe et ladite partie de siège mobile interne de chaque élément de siège annulaire étant séparées par un espace (33) pour le passage du fluide.

5. Robinet-vanne bidirectionnel selon l'une quelconque des revendications précédentes, un moyen élastique (40) est disposé entre une face transversale de la paroi d'extrémité (32f) de chaque évidement et une paroi opposée (34f) de la partie de siège mobile interne correspondante pour amener la partie de siège mobile interne vers l'élément vanne (14).

6. Robinet-vanne bidirectionnel selon l'une quelconque des revendications précédentes, chaque paroi d'extrémité possédant un profil en gradin comprenant une série de faces longitudinales et transversales perpendiculaires (32a-f) lorsque vue en coupe transversale à travers l'axe de l'orifice de robinet (10) et lesdites parois opposées de chaque élément siège annulaire comprenant les faces longitudinales et transversales complémentaires (34a-f).

7. Robinet-vanne bidirectionnel selon la revendication 6, une cavité (36) étant formée entre les faces longitudinales et transversales complémentaires respectives de chaque partie de siège mobile interne (34d, 34e) et les faces opposées correspondantes de sa paroi d'extrémité d'évidement (32c, 32d).

8. Robinet-valve bidirectionnel selon la revendication 7, le au moins un ou chaque élément d'étanchéité annulaire (38) se trouvant dans sa cavité correspondante (36) pour assurer l'étanchéité sélectivement au niveau d'un emplacement annulaire interne ou externe.
